# EUROPÄISCHE PATENTSCHRIFT

(11) **EP 2 156 142 B1**
(45) Veröffentlichungstag und Bekanntmachung des Hinweises auf die Patenterteilung: **27.06.2012**
(21) Anmeldenummer: 08718210.1
(22) Anmeldetag: 26.03.2008
(51) Int. Cl.: G01C 21/36, G01C 21/34

(54) **VERFAHREN UND ANORDNUNG ZUR AUSGABE VON ZIELFÜHRUNGSHINWEISEN**
METHOD AND ARRANGEMENT FOR DISPLAYING ROUTE GUIDANCE INSTRUCTIONS
PROCÉDÉ ET ENSEMBLE PERMETTANT LA SORTIE D'INDICATIONS DE GUIDAGE À DESTINATION

(30) Priorität: 22.05.2007 DE 102007023765
(43) Veröffentlichungstag der Anmeldung: 24.02.2010
(73) Patentinhaber: Robert Bosch GmbH, 70442 Stuttgart (DE)
(72) Erfinder: NOLL, Stefan, 30880 Laatzen (DE); MUELLER, Guido, 06484 Quedlinburg (DE); STUEBNER, Guido, 30455 Hannover (DE)
(86) Internationale Anmeldenummer: PCT/EP2008/053534
(87) Internationale Veröffentlichungsnummer: WO 2008/141855

(56) Entgegenhaltungen:
- DE-A1-102005 049 769
- US-A- 5 925 090

## Beschreibung

### Stand der Technik

Die Erfindung geht vom einem Verfahren und einer Anordnung zur Ausgabe einer Richtungsinformation nach der Gattung der unabhängigen Patentansprüche aus.

Nach Eingabe eines Fahrziels und Bestimmung eines aktuellen Fahrzeugstandorts mittels einer Ortungseinrichtung

An sich bekannte Fahrzeugnavigationssysteme berechnen auf Grundlage von gespeicherten Straßenkartendaten mit einem Bester-Pfad-Algorithmus eine Fahrroute von einem Fahrzeugstandort, der mit einer Ortungseinrichtung bestimmt wird, zu einem Zielort, der vom Benutzer/Fahrzeugführer vorgegeben wird. Auf Grundlage dieser Fahrroute und eines im Zuge der Fahrt entlang der Fahrroute wiederholt bestimmten jeweiligen Fahrzeugstandortes werden dem Fahrzeugführer Zielführungshinweise ausgegeben, welche diesen entlang der Route führen. Diese Zielführungshinweise können beispielsweise in der Form "an der nächsten Kreuzung rechts abbiegen und dann der x-Straße folgen" über an das Navigationssystem angeschlossene Lautsprecher akustisch wiedergegeben werden.

In der DE 10 2005 049 769 A1 ist ein gattungsgemäßes Verfahren beschrieben. Bei diesem werden Zielführungshinweise ausgegeben, welche eine Bezeichnung einer zu befahrenden Straße enthalten. Um dem Fahrzeugführer die Orientierung zu erleichtern, wird dabei im Falle mehrerer möglicher Bezeichnungen der zu befahrenden Straße bevorzugt diejenige Bezeichnung ausgegeben, die für eine Mehrzahl von aufeinanderfolgenden Straßenabschnitten gleich ist.

Aus der US 5,925,090 A ist ein Verfahren zur Ausgabe einer Richtungsinformation bekannt, die einer auf einem Verkehrsschild angegeben Ortsinformation entspricht, welche einem von einem aktuellen Abschnitt einer Route (dies entspricht dem Abschnitt der Route bis zum nächsten "decision point" auf dem sich das Fahrzeug befindet) aus gesehen folgenden Abschnitt der Route zugeordnet ist, wobei im Falle mehrerer dem folgenden Routenabschnitt zugeordneter Ortsinformationen bevorzugt diejenige/ n der Ausgabe der Richtungsinformation zugrunde gelegt wird oder werden, die für den folgenden Routenabschnitt und für die darauf weiter folgenden Routenabschnitte bis zu dem für den betreffenden Navigationsvorgang letzten Routenabschnitt übereinstimmt oder übereinstimmen.

### Vorteile der Erfindung

Die Erfindung mit den Merkmalen der unabhängigen Patentansprüche erleichtert für einen Fahrzeugführer in vorteilhafter Weise die Orientierung in einem Straßennetz.

Dazu umfassen die von einem Navigationssystem als Beispiel für eine erfindungsgemäße Anordnung ausgegebenen Richtungs- oder Zielführungshinweise vorteilhaft Ortsinformationen, die auf entlang der befahrenen Route aufgestellten Verkehrsschildern angegeben sind. Eine besondere Erleichterung für den Nutzer ergibt sich dabei dadurch, dass im Falle mehrerer Ortsinformationen, die sich auf den Abschnitt der Route beziehen, der dem aktuell befahrenen Routenabschnitt unmittelbar folgt, diejenige/n der mehreren Ortsinformationen der Ausgabe der Richtungsinformation zugrunde gelegt wird oder werden, die für die dem folgenden Routenabschnitt weiter unmittelbar folgenden Routenabschnitte die größte Häufigkeit aufweist oder aufweisen.

Dadurch kann die Anzahl der als Bestandteil der Richtungsinformation auszugebenden Ortsinformationen im Idealfall auf eine einzige Ortsinformation reduziert werden, der darüber hinaus im weiteren Verlauf der Route für eine Mehrzahl von aufeinanderfolgenden Routenabschnitten und damit Richtungshinweisen gleich bleibt. Somit wird die Informationsflut für den Benutzer eingedämmt. Außerdem kann sich der Benutzer vorteilhaft anhand zumindest streckenweise gleich bleibender Ortsinformationen orientieren, was erfahrungsgemäß ebenfalls eine erhebliche Erleichterung darstellt.

Die Ortsinformationen sind auf Autobahn-Hinweistafeln angebrachte Hinweise über Fern- und Nahziele, die über einen aktuellen oder eine abzweigenden Streckenabschnitt erreichbar sind.

Zur Bestimmung der der Ausgabe der Richtungsinformation zugrunde zu legenden Ortsinformation/en wird die Analyse der Route ausgehend vom Ziel bis zur aktuellen Position durchgeführt. Die Analyse berücksichtigt vorzugsweise alle auf der Route vorkommenden Verkehrsschilder-Ortsinformationen und ermittelt die Häufigkeit des Vorkommens jeder einzelnen Ortsinformation eines jeden Verkehrsschildes.

Vorteilhaft ist, wenn die Bestimmung der einer Richtungsinformation zugrunde zu legenden Ortsinformation nach Passieren eines Abschnitts der Route erneut angestoßen wird. Alternativ oder ergänzend kann vorteilhaft die Bestimmung der einer Richtungsinformation zugrunde zu legenden Ortsinformation nach Passieren eines eine Ortsinformation tragenden Verkehrsschildes erneut angestoßen werden.

Vorteilhaft werden der Bestimmung der einer Richtungsinformation zugrunde zu legenden Ortsinformation nur gleichartige Verkehrsschilder zugrunde gelegt.

### Zeichnungen

Ausführungsbeispiele der Erfindung sind in den Figuren dargestellt und werden nachfolgend näher erläutert.

### Es zeigen

Figur 1 ein Blockschaltbild einer erfindungsgemäßen Anordnung zur Durchführung des erfindungsgemäßen Verfahrens am Beispiel eines Fahrzeugnavigationssystems,
Figur 2 schematisch einen Ausschnitt aus einem Verkehrswegenetz, hier konkret einem Straßennetz, anhand dessen die Funktionsweise der Erfindung nachfolgend beschrieben wird,
Figuren 3A, 3B und 3C beispielhaft Hinweisschilder, die entlang der Route aufgestellt sind.

### Beschreibung der Ausführungsbeispiele

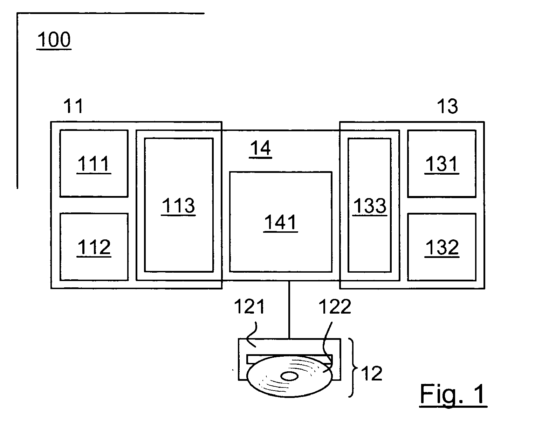

In Figur 1 bezeichnet 100 ein erfindungsgemäßes Navigationssystem zur Durchführung des erfindungsgemäßen Verfahrens. Das Navigationssystem 100 umfasst ein Ortungsmodul 11 zur Bestimmung eines aktuellen Standorts und damit zur Bestimmung des aktuellen Standorts seines Benutzers. Dieses wertet beispielsweise Signale eines GPS-Empfängers 111 und fakultativ weiterer Ortsbestimmungsmittel, wie Beschleunigungssensoren 112, aus und bestimmt daraus mittels ein Softwaremoduls 113, das beispielsweise durch eine zentrale Steuerung 14 des Navigationsgeräts abgearbeitet wird, Positionsdaten.

Das Navigationsgerät 100 umfasst weiterhin eine digitale Karte 12, in der Informationen über beispielsweise von einem Kraftfahrzeug befahrbare Verkehrswege enthalten sind. Die digitale Karte 12 kann bevorzugt in an sich bekannter Weise als CD-ROM oder DVD-ROM 122 ausgebildet sein, die mittels eines entsprechenden Laufwerks 121 des Navigationsgeräts 100 gelesen wird. In den Kartendaten sind weiterhin Informationen über entlang der Straßenabschnitte 1, 2, 3, 4 und 5 aufgestellte Hinweisschilder 21, 22, 23 und 24 und deren Inhalte bzw. Aufschriften enthalten. Im Falle von Autobahn-Hinweisschildern sind dies unter anderem Ortsnamen von Städten, die im Bundeswegenetzplan aufgeführten Endstellen der einzelnen Autobahnteilabschnitte entsprechen. Insbesondere umfassen diese Hinweisschilder weiter Informationen über Orte, die über einen jeweiligen Streckenabschnitt erreichbar sind.

Das Navigationssystem 100 umfasst ferner eine Benutzerschnittstelle 13 umfassend Eingabemittel 131, wie Tastschalter oder sonstige Bedienelemente, wie etwa ein Spracheingabemodul oder ein berührungsempfindlicher Bildschirm, auch Touch Screen, sowie Ausgabemittel 132 in Form einer Anzeige, auch Display, und/oder eines akustischen Ausgabemoduls. Die Benutzerschnittstelle dient zum einen der Zieleingabe durch den Benutzer, zum anderen der Zielführung entlang einer vom Navigationssystem berechneten Route, etwa durch Ausgabe von akustischen oder Anzeige von optischen Zielführungshinweisen, hier auch als Richtungsinformationen bezeichnet.

Das Navigationssystem 100 weist weiterhin eine zentrale Steuerung 14 auf, die in Form eines programmgesteuerten Rechners ausgebildet ist. Neben dem Ortungsmodul 11 steuert ein weiteres Softwaremodul 133 die Benutzerschnittstelle 13 d. h. die Kommunikation des Navigationsgeräts mit dem Benutzer. Schließlich steuert ein drittes Softwaremodul 141 den Informationsaustausch und die Informationsverarbeitung innerhalb des Navigationssystems 100, darunter die Routenberechnung unter Rückgriff auf die Kartendaten mittels eines Besten-Pfad-Algorithmus, wie etwa Ford-Moore, und auch das erfindungsgemäße Verfahren.

Eine vom Navigationssystem nach Eingabe des Fahrziels Dortmund über die Eingabemittel 131 berechnete Fahrroute 10 führt beispielsweise von Hildesheim, Robert-Bosch-Straße, nach Dortmund, Stadtmitte. Die Route verläuft von Hildesheim über den Autobahnanschluss Hildesheim an der Autobahn A7 über die Autobahn A7 Richtung Norden bis zum Autobahnkreuz Hannover-Ost, wo sich die Autobahnen A7 und A2 kreuzen, von dort über die Autobahn A2 Richtung Westen über das Autobahnkreuz Hannover-Burgdorf, wo sich die Autobahnen A2 und A37 kreuzen, hinweg bis zur Anschlussstelle Dortmund-Nordost an der Autobahn A2 und von dort über die Bundesstraße B236 nach Dortmund.

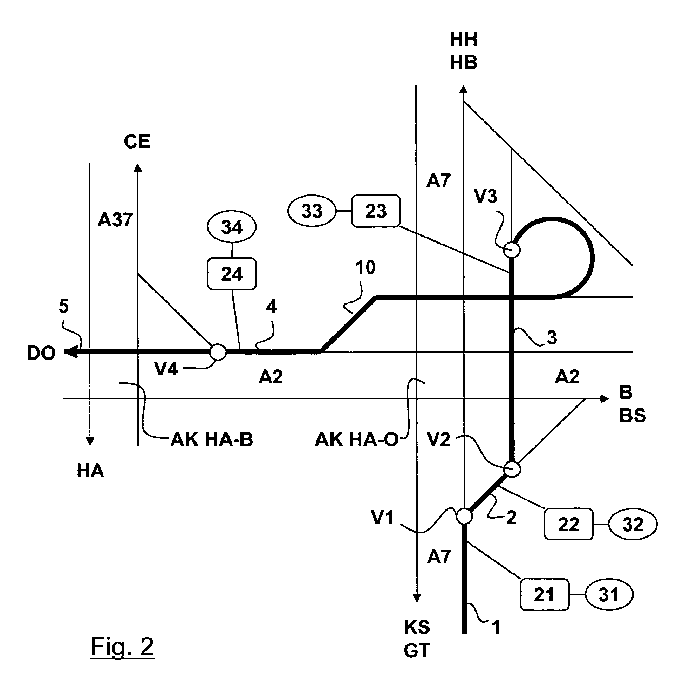

In Figur 2 ist schematisch ein Ausschnitt des Verkehrswegenetzes, umfassend die beiden vorgenannten Autobahnkreuze mit dem darin eingezeichneten Routenverlauf dargestellt. Darin bezeichnen A7 die Autobahn A7 mit der Fahrtrichtung Hamburg HH und Bremen HB sowie der Gegenrichtung Kassel KS und Göttingen GT, A2 die Autobahn A2 mit den Fahrtrichtungen Berlin B und Braunschweig BS sowie Dortmund DO, A37 die Autobahn A37 mit den Fahrtrichtungen Celle CE und Hannover HA und schließlich AK HA-O das Autobahnkreuz Hannover-Ost und AK HA-B das Autobahnkreuz Hannover-Burgdorf. In diesen Straßennetzausschnitt ist fett ausgezogen ein Ausschnitt der vom Fahrzeugnavigationsgerät berechneten, oben angegebenen Route 10 eingezeichnet. Diese setzt sich hier aus aufeinanderfolgenden Abschnitten 1, 2, 3, 4 und 5 zusammen, welche Abschnitte jeweils von möglichen Abzweigpunkten V1, V2, V3, V4 von der Route begrenzt sind. Der Abschnitt 1 ist dabei gegeben durch die Strecke Autobahnauffahrt Hildesheim auf die A7 bis Ausfahrt am Autobahnkreuz Hannover-Ost AK HA-O von der A7. Der weitere Abschnitt 2 ist definiert durch die Ausfahrt vom Autobahnkreuz Hannover-Ost AK HA-O von der A7 und die darauffolgende Abbiegespur bis zu dem Punkt V2, an dem der Abbiegespur weiter Richtung Verzweigungspunkt V3 gefolgt oder alternativ von der Abbiegespur Richtung A2, Berlin abgebogen werden kann. Der weitere Routenabschnitt 3 ist definiert durch den Verzweigungspunkt V2 und den weiteren Verzweigungspunkt V3 auf der Abbiegespur, an dem entweder geradeaus wieder auf die A7 Richtung Hamburg aufgefahren werden oder alternativ gemäß dem Routenverlauf von der Abbiegespur rechts abgebogen werden kann, um auf die A2 Richtung Dortmund aufzufahren. Der vierte Routenabschnitt 4 erstreckt sich vom dritten Verzweigungspunkt V3 bis zum nächsten Verzweigungspunkt V4, an dem von der A2 auf die A37 Richtung Hannover oder Celle abgefahren werden oder alternativ gemäß dem Routenverlauf weiter der A2 in Richtung Dortmund gefolgt werden kann. Der fünfte Routenabschnitt 5 schließt sich an den vierten Routenabschnitt an.

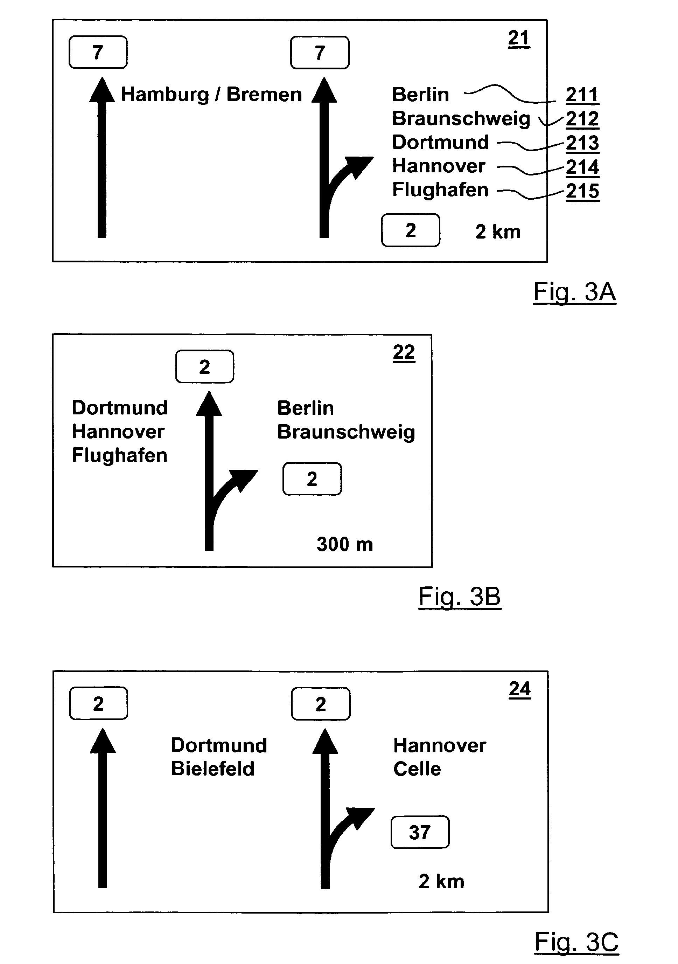

Auf einem Autobahn-Wegweiserschild 21 gemäß Figur 3A, nachfolgend "Schild 1", welches entlang der Route aus Richtung Hildesheim kommend vor dem Autobahnkreuz Hannover-Ost im Bereich des Routenabschnitts 1, beispielsweise ca. 2km vor der Ausfahrt V1 von der A7, angeordnet ist, finden sich die Ortsinformationen bzw. Fahrrichtungshinweise
- Hamburg sowie Bremen, für den Fall dass der A7 weiter gefolgt wird,
- Berlin 211, Braunschweig 212 sowie Dortmund 213, Hannover 214, Flughafen 215 für den Fall, dass von der A7 am Autobahnkreuz Hannover-Ost abgebogen wird.

Das Autobahn-Wegweiserschild 21 gemäß Figur 3A ist ebenso wie die weiteren Schilder 3B und 3C schematisch dargestellt, wobei kein Anspruch auf Übereinstimmung mit der realen Beschilderung besteht. Auch die beschriebenen Positionen bzw. Aufstellpunkte der Schilder sind fiktiv.

Auf einem weiteren Wegweiserschild 22 gemäß Figur 3B, nachfolgend "Schild 2", das unmittelbar vor oder an der Abbiegespur 2 von der A7 angeordnet ist, finden sich die Ortsinformationen bzw. Fahrrichtungshinweise
- Berlin, Braunschweig, für den Fall, dass von der Abbiegespur unmittelbar erneut abgebogen wird, so dass im Folgenden der A2 in Richtung Osten gefolgt würde
- Dortmund, Hannover, Flughafen für den Fall, dass von der Abbiegespur erst an der nächstfolgenden Möglichkeit abgebogen wird, so dass der A2 in Richtung Westen gefolgt würde.

Auf einem weiteren Wegweiserschild 24 gemäß Figur 3C, nachfolgend "Schild 4", das entlang der Route aus Richtung Hildesheim kommend vor dem Autobahnkreuz Hannover-Buchholz im Bereich des vierten Routenabschnitts 4 angeordnet ist finden sich die Ortsinformationen bzw. Fahrrichtungshinweise
- Dortmund, Bielefeld für den Fall dass der A2 weiter gefolgt wird,
- Hannover sowie Celle für den Fall, dass von der A2 am Autobahnkreuz Hannover-Burgdorf abgebogen wird.

Vor oder am Abzweigpunkt V3, also an der Stelle, an der die Route von der Abbiegespur der A7 in Richtung A2, Dortmund/Hannover abbiegt, ist ein weiteres Hinweisschild 23, nachfolgend "Schild 3", installiert, welches die Fahrrichtungshinweise
- Dortmund, Hannover, Flughafen für den Fall, dass von der Abbiegespur abgebogen wird, so dass der A2 in Richtung Westen gefolgt würde, umfasst.

Die hier beschriebenen Fahrrichtungshinweise beinhalten als wesentlichen Bestandteil jeweils Ortsinformationen, im vorliegenden Fall Ortsnamen von Städten, die im Bundeswegenetzplan aufgeführten Endstellen der einzelnen Autobahnteilabschnitte entsprechen. Konkret sind dies die Städtenamen Hamburg für den betrachteten Abschnitt der A7, Berlin und Dortmund für den betrachteten Abschnitt der A2 und Hannover für die A37. Daneben sind in einigen Fällen auch Ortsinformationen für näher gelegene wichtige Punkte entlang dieser Autobahnteilabschnitte angegeben, wie Braunschweig für die A2 Richtung Osten, Hannover, Flughafen und später Bielefeld für die A2 Richtung Westen.

Das erfindungsgemäße Verfahren generiert die von ihm zur Zielführung auszugebenden Zielführungshinweise, auch Richtungsinformationen, unter Verwendung bzw. Einbeziehung von auf den Hinweisschildern angegebenen Ortsinformationen. Dabei werden nur solche Ortsinformationen eines Verkehrsschildes berücksichtigt, die sich auf den Routenverlauf beziehen und nicht nur auf einen bestimmten Punkt auf der Route. Richtungsinformationen, die den Routenverlauf nicht betreffen, bleiben unberücksichtigt. Die Darstellung der Richtungsinformationen würde dann folgende Ortsinformationen umfassen.
- Auf Abschnitt 1 in Fahrrichtung entlang der Route vor oder am Schild 1 gemäß Figur 3A (Richtungsinformation 31): " ... Richtung Dortmund" anstatt beispielsweise " ... Richtung Berlin, Braunschweig, Dortmund, Hannover, Flughafen ...",
- Auf Abschnitt 2 vor Schild 2 gemäß Figur 3B (Richtungsinformation 32): " ... Richtung Dortmund" anstatt beispielsweise "... Richtung Dortmund, Hannover, Flughafen ..."
- Auf Abschnitt 3 vor dem Schild 3 (Richtungsinformation 33): " ... Richtung Dortmund" anstatt beispielsweise "... Richtung Dortmund, Hannover, Flughafen ..."
- Auf Abschnitt 4 vor Schild 4 gemäß Figur 3C (Richtungsinformation 34): " ... Richtung Dortmund" anstatt beispielsweise "Dortmund, Bielefeld ...".

Die vollständigen Fahranweisungen könnten dann lauten:
- Auf Abschnitt 1 in Fahrrichtung entlang der Route vor oder am Schild 1 gemäß Figur 3A: "An der nächsten Ausfahrt rechts abbiegen und der A2 in Richtung Dortmund folgen"
- Auf Abschnitt 2 vor Schild 2 gemäß Figur 3B: " Der Abbiegespur in Richtung Dortmund weiter folgen"
- Auf Abschnitt 3 vor Schild 3: " Jetzt rechts in Richtung Dortmund abbiegen und der A2 in Richtung Dortmund weiter folgen"
- Auf Abschnitt 4 vor Schild 4 gemäß Figur 3C: " Der A2 in Richtung Dortmund weiter folgen".

Zu erreichen ist diese Darstellung beispielsweise durch Analyse der Route ausgehend vom Ziel bis zur aktuellen Position. Die Analyse berücksichtigt vorzugsweise alle auf der Route vorkommenden Verkehrsschilder-Ortsinformationen und ermittelt die Häufigkeit des Vorkommens jeder einzelnen Ortsinformation eines jeden Verkehrsschildes. Das Ergebnis der Analyse würde im beschriebenen Beispiel wie folgt aussehen.

| Ortsinformation | Schild 4 | Schild 3 | Schild 2 | Schild 1 | Häufigkeit der Ortsinformation |
|---|---|---|---|---|---|
| Berlin | | | | X | 1 |
| Bielefeld | X | | | | 1 |
| Braunschweig | | | | X | 1 |
| Dortmund | X | X | X | X | 4 |
| Flughafen | | X | X | X | 3 |
| Hannover | | X | x | X | 3 |

Aufgrund der Tatsache, dass Dortmund am häufigsten in den Verkehrsschild-Ortsinformationen auf der Route und auf dem dem Fahrzeugstandort nächstfolgenden Hinweisschild Schild 1 zu finden ist, wird Dortmund als die für den Benutzer / Fahrzeugführer offensichtlich wichtigste der auf Schild 1 vorhandenen Ortsinformationen für nachfolgend zu erzeugende Richtungsinformationen ausgewählt.

Diese Analyse wird bevorzugt erstmalig nach Abschluss der Routenberechnung in der Steuerung 14 durch die Software 141 durchgeführt. Nach Abschluss der Routenberechnung liegt die Route als Folge von aufeinanderfolgenden Routenabschnitten in einem Speicher des Navigationssystems 100, vorzugsweise im Arbeitsspeicher der Steuerung 14 vor. Zur Durchführung der Analyse werden zu den gespeicherten Routenabschnitten in der Karte vorhandene Ortsinformationen, die auf den Verkehrsschildern entlang der Route angegeben sind, ausgelesen und auf Grundlage dieser Informationen die Analyse durchgeführt.

Eine vorteilhafte Weiterbildung der Erfindung sieht vor, dass die vorstehende Analyse nicht nur einmalig bei Beginn der Zielführung bzw. nach Abschluss der Routenberechnung, sondern vorzugsweise wiederholt durchgeführt wird. Beispielsweise kann die Analyse jeweils nach Passieren bzw. Zurücklegen eines Routenabschnitts erneut angestoßen werden. So kann die Häufigkeitsverteilung der Ortsinformationen im Laufe der Route wechseln, beispielsweise wenn die Route von einer zunächst befahrenen auf eine andere Autobahn abbiegt.

Alternativ oder ergänzend kann die Bestimmung der einer Richtungsinformation zugrunde zu legenden Ortsinformation nach Passieren eines eine Ortsinformation tragenden Verkehrsschildes erneut angestoßen werden. Gemäß einer Ausführungsform der Erfindung werden der Bestimmung der einer Richtungsinformation zugrunde zu legenden Ortsinformation nur gleichartige Verkehrsschilder zugrunde gelegt, also beispielsweise nur Fahrrichtungs-Hinweisschilder, nicht aber beispielsweise Entfernungstafeln, auf denen Entfernungsangaben zu über die aktuell befahrene Straße erreichbare Orte angegeben sind. Alternativ können aber auch beispielsweise diese Entfernungstafeln oder andere Ortsinformationen tragende Schilder für die Bestimmung der relevanten Ortsinformation berücksichtigt werden.

## Patentansprüche

1. Verfahren zur Ausgabe einer Richtungsinformation (31, 32, 33, 34), die einer auf einem Verkehrsschild (21, 22, 23, 24) angegebenen Ortsinformation (211, 212, 213, 214, 215) entspricht, welche einem von einem aktuellen Abschnitt (1) einer Route (10) aus gesehen folgenden Abschnitt (2) der Route (10) zugeordnet ist,
wobei Verkehrswegeabschnitten (1, 2, 3, 4, 5) Ortsinformationen (211, 212, 213, 214, 215) zugeordnet sind, die auf Verkehrsschildern (21, 22, 23, 24) angegeben sind, wobei die Ortsinformationen (211, 212, 213, 214, 215) Städtenamen von Städten sind, die über den zugeordneten Abschnitt (2) im weiteren Verlauf erreichbar sind, und wobei Städtenamen auf Autobahn-Hinweistafeln angebrachte Hinweise über Fern- und Nahziele sind, die über einen aktuellen oder abzweigenden Streckenabschnitt erreichbar sind.
**dadurch gekennzeichnet,**
**dass** im Falle mehrerer dem folgenden Routenabschnitt (2) zugeordneter Ortsinformationen (211, 212, 213, 214, 215) diejenige oder diejenigen (213) für die Ausgabe der Richtungsinformation (31, 32, 33, 34) ausgewählt wird oder werden, die für den folgenden Routenabschnitt (2) und die darauf weiter folgenden Routenabschnitte (3, 4, 5) die größte Häufigkeit aufweist oder aufweisen.

2. Verfahren nach Anspruch 1, **dadurch gekennzeichnet, dass** die Bestimmung der einer Richtungsinformation (31, 32, 33, 34) zugrunde zu legenden Ortsinformation (211, 212, 213, 214, 215) nach Passieren eines Abschnitts (1, 2, 3, 4, 5) der Route (10) erneut angestoßen wird.

3. Verfahren nach einem der Ansprüche 1 oder 2, **dadurch gekennzeichnet, dass** die Bestimmung der einer Richtungsinformation (31, 32, 33, 34) zugrunde zu legenden Ortsinformation (211, 212, 213, 214, 215) nach Passieren eines eine Ortsinformation tragenden Verkehrsschildes (21, 22, 23, 24) erneut angestoßen wird.

4. Verfahren nach einem der vorhergehenden Ansprüche, **dadurch gekennzeichnet, dass** der Bestimmung der einer Richtungsinformation Richtungsinformation (31, 32, 33, 34) zugrunde zu legenden Ortsinformation (211, 212, 213, 214, 215) nur gleichartige Verkehrsschilder (21, 22, 23, 24) zugrunde gelegt werden.

5. Vorrichtung (100) zur Ausgabe einer Richtungsinformation (31, 32, 33, 34), die einer auf einem Verkehrsschild (21, 22, 23, 24) angegebenen Ortsinformation (211, 212, 213, 214, 215) entspricht, welche einem von einem aktuellen Abschnitt (1) einer Route (10) aus gesehen folgenden Abschnitt (2) der Route (10) zugeordnet ist,
mit einem Speicher (12) mit Verkehrswegeabschnitte (1, 2, 3, 4, 5) repräsentierenden Informationen und mit den Verkehrswegeabschnitten zugeordneten Ortsinformationen (211, 212, 213, 214, 215 die auf den Verkehrsschildern (21, 22, 23, 24) angegeben sind, wobei die Orstsinformationen (211, 212, 213, 214, 215) Städtenamen von Städten sind, die über den zugeordneten Abschnitt (2) im weiteren Verlauf erreichbar sind, und wobei die Städtenamen auf Autobahn-Hinweistafeln angebrachte Hinweise über Fern- und Nahziele sind, die über einen aktuellen oder abzweigenden Streckenabschnitt erreichbar sind **dadurch gekennzeichnet, dass** die Vorrichtung (100) eine Steuerung (14) aufweist, welche im Falle mehrerer dem folgenden Routenabschnitt (2) zugeordneter Ortsinformationen (211, 212, 213, 214, 215) diejenige oder diejenigen (213) für die Ausgabe einer Richtungsinformation (31, 32, 33, 34) auswählt, die für den (2) und die darauf weiter folgenden Routenabschnitt/e (3, 4, 5) die größte Häufigkeit aufweist oder aufweisen.

## Claims

1. Method for outputting directional information (31, 32, 33, 34) which corresponds to locality information (211, 212, 213, 214, 215) which appears on a road sign (21, 22, 23, 24) and is assigned to a section (2) of the route (10) which is a following section (2) viewed from a current section (1) of a route (10), wherein traffic route sections (1, 2, 3, 4, 5) are assigned locality information (211, 212, 213, 214, 215) which appears on road signs (21, 22, 23, 24), wherein the locality information (211, 212, 213, 214, 215) comprises names of towns or cities which can be subsequently reached via the assigned section (2), and wherein the names of the towns or cities are instructions relating to long-distance destinations and short-distance destinations which are present on motorway signboards and which can be reached via a current or a branching-off route section,
**characterized**
**in that** if there are a plurality of locality information items (211, 212, 213, 214, 215) which are assigned to the following route section (2), that information item or those information items (213) which is or are most frequent for the following route section (2) and the route sections (3, 4, 5) following that is/are selected for the outputting of the directional information (31, 32, 33, 34).

2. Method according to Claim 1, **characterized in that** the determination of the locality information (211, 212, 213, 214, 215) on which directional information (31, 32, 33, 34) is based is triggered again after a section (1, 2, 3, 4, 5) of the route (10) is passed through.

3. Method according to one of Claims 1 or 2, **characterized in that** the locality information (211, 212, 213, 214, 215) on which directional information (31, 32, 33, 34) is based is triggered again after a road sign (21, 22, 23, 24) bearing locality information (211, 212, 213, 214, 215) is passed by.

4. Method according to one of the preceding claims, **characterized in that** the determination of the locality information (211, 212, 213, 214, 215) on which directional information (31, 32, 33, 34) is based is based only on road signs (21, 22, 23, 24) of the same type.

5. Device (100) for outputting directional information (31, 32, 33, 34) which corresponds to locality information (211, 212, 213, 214, 215) which appears on a road sign (21, 22, 23, 24) and is assigned to a section (2) of the route (10) which is a following section (2) when viewed from a current section (1) of a route (10),
having a memory (12) with information representing traffic route sections (1, 2, 3, 4, 5) and with locality information (211, 212, 213, 214, 215) which is assigned to the traffic route sections and appears on the road signs (21, 22, 23, 24), wherein the locality information (211, 212, 213, 214, 215) comprises names of towns or cities which can be subsequently reached via the assigned section (2), and wherein the names of the towns or cities are instructions relating to long-distance destinations and short-distance destinations which appear on motorway signboards and can be reached via a current or a branching-off route section, **characterized in that** the device (100) has a controller (14) which, if there are a plurality of locality information items (211, 212, 213, 214, 215) which are assigned to the following route section (2), selects that information item or those information items (213) for the outputting of directional information (31, 32, 33, 34) which is/are most frequent for the following route section (2) and the route sections (3, 4, 5) following that.

## Revendications

1. Procédé pour délivrer des informations d'orientation (31, 32, 33, 34) qui correspondent à des informations de localisation (211, 212, 213, 214, 215) indiquées sur un écran de circulation (21, 22, 23, 24) et associées à une partie (2) d'un itinéraire (10) vue à la suite de la partie en cours (1) de l'itinéraire (10),
des informations de localisation (211, 212, 213, 214, 215) indiquées sur des écrans de circulation (21, 22, 23, 24) étant associées à des parties (1, 2, 3, 4, 5) du parcours de circulation,
les informations de localisation (211, 212, 213, 214, 215) étant les noms de villes qui peuvent être atteintes en poursuivant le déplacement sur la partie (2) associée, les noms de villes étant des indications de destinations éloignées ou proches présentées sur des panneaux indicateurs autoroutiers et qui peuvent être atteintes en suivant la partie de parcours en cours ou une partie de parcours qui en dérive.
**caractérisé en ce qu'**au cas où plusieurs informations de localisation (211, 212, 213, 214, 215) sont associées à la partie suivante (2) de l'itinéraire, celle ou celles des informations (213) qui présentent la plus grande fréquence pour la partie d'itinéraire (2) et les autres parties d'itinéraire (3, 4, 5) qui la suivent sont sélectionnées pour délivrer une information d'orientation (31, 32, 33, 34).

2. Procédé selon la revendication 1, **caractérisé en ce que** la détermination des informations de localisation (211, 212, 213, 214, 215) qui forment la base d'une information d'orientation (31, 32, 33, 34) est reprise après qu'une partie (1, 2, 3, 4, 5) de l'itinéraire (10) a été parcourue.

3. Procédé selon l'une des revendications 1 ou 2, caractérisé la détermination des informations de localisation (211, 212, 213, 214, 215) qui forment la base d'une information d'orientation (31, 32, 33, 34) est reprise après qu'un écran de circulation (21, 22, 23, 24) qui porte une information de localisation a été passé.

4. Procédé selon l'une des revendications précédentes, **caractérisé en ce que** seuls des écrans de circulation (21, 22, 23, 24) de même type sont à la base de la détermination des informations de localisation (211, 212, 213, 214, 215) qui sont à la base des informations d'orientation (31, 32, 33, 34).

5. Dispositif (100) pour délivrer des informations d'orientation (31, 32, 33, 34) qui correspondent à des informations de localisation (211, 212, 213, 214, 215) indiquées sur un écran de circulation (21, 22, 23, 24) et associées à une partie (2) d'un itinéraire (10) vue à la suite de la partie en cours (1) de l'itinéraire (10),
le dispositif présentant une mémoire (12) qui contient des informations qui représentent des parties (1, 2, 3, 4, 5) de voies de circulation et des informations de localisation (211, 212, 213, 214, 215) associées aux parties de voies de circulation et indiquées sur les écrans de circulation (21, 22, 23, 24), les informations de localisation (211, 212, 213, 214, 215) étant les noms de villes qui peuvent être atteintes en poursuivant le déplacement sur la partie (2) associée, les noms de villes étant des indications de destinations éloignées ou proches présentées sur des panneaux indicateurs autoroutiers et qui peuvent être atteintes en suivant la partie de parcours en cours ou une partie de parcours qui en dérive,
**caractérisé en ce que** le dispositif (100) présente une commande (14) qui
au cas où plusieurs informations de localisation (211, 212, 213, 214, 215) sont associées à la partie suivante (2) de l'itinéraire, sélectionne celle ou celles des informations (213) pour délivrer une information d'orientation (31, 32, 33, 34) qui présente la plus grande fréquence pour la partie d'itinéraire (2) et les autres parties d'itinéraire (3, 4, 5) qui la suivent.
